# EUROPEAN PATENT APPLICATION

(11) **EP 1 253 793 A2**
(43) Date of publication of application: **30.10.2002**
(21) Application number: 02008803.5
(22) Date of filing: 19.04.2002
(51) Int. Cl.: H04Q 7/32

(54) **Communication system with a configurable interface for a peripheral unit, and configuration procedure of said interface**

(30) Priority: 27.04.2001 IT MI20010882
(71) Applicant: Siemens Information and Communication Networks S.p.A., 20126 Milano (IT)
(72) Inventor: Bernasconi, Lorenzo, 20050 Mezzago (IT); Groppi, Paolo, 29100 Piacenza (IT); Poldrugo, Luigi, 20021 Bollate (IT)
(74) Representative: Giustini, Delio

(57) **Abstract**

In a transceiver station of a mobile communication system with a central unit (1) and a plurality of peripheral units not placed with the central portion itself (2a...2n), the peripheral units (2a...2n) include an interface (6) destined to the adaptation of service signals among the lines (3a...3n) connecting the central unit (1) with the peripheral units (2a...2n) and lines (10) inside the peripheral units (2a...2n). The interface (6) includes also logic programmable devices (60a) and a couple of memories (61, 62) containing both the program for the logic device. On switching-on, the central unit (1) checks that the two memories (61, 62) contain the current version of the programme and, in the negative, performs the updating of the memories themselves (61, 62), on separate moments, (Fig. 2)

## Description

### Field of the Invention

The present invention relates to a communication systems in general, e.g. a transceiver station of a mobile communication system with re-configurable interface for a peripheral unit, and the configuration procedure for said interface.

Preferably, but not exclusively, the transceiver station, which the invention is applied to, is a transceiver station belonging to a base transceiver station of a picocellular GSM system . The term "picocellular GSM system " includes both the true GSM systems, operating in the 900 MHz frequency band, and the derived known systems, such as DCS (Digital Communication System) or PCS (Personal Communication System), operating in the 1800 or 1900 MHz band, respectively.

In the following a picocellular communication system will be disclosed but the present invention should not be considered limited thereto since other embodiments may be made by those skilled in the art without departing from the ambit of the present invention. In principle, the present invention may be applied to any communication system including a central unit and a plurality of Agents connected to the central unit via a communication link. The Agents may be whatever kind of electronic device without processor on board and including a logic programmable component suitable to receive adjustment operating command in order to perform the operations requested by said adjustment command. The communication system of the invention may be therefore adapted to connect a maintenance centre (central unit) to the electronic remote systems (Agents) whose operations should be adjusted or updated by the maintenance centre.

Going back to the picocellular communication systems, said systems offer a valid alternative to fixed networks for use in limited areas, in particular within companies, shopping centres, etc. To obtain high use flexibility and coverage efficiency at limited cost, modular architectures have been proposed for the transceiver stations of these systems. One of these modular-structure stations is traded by the Applicant under the name of "picoBTS".

Said station includes a central part or server and a plurality of peripheral units or Agents connected to the central part through relevant twisted pairs. The server offers functions common to all the carriers processed by a transceiver station, among which the control of the Agent configuration, which is the function of interest for this invention. Each one of the agents performs in turn all the control and processing functions of the calls for a single carrier.

For the service dialogue with the central part, the Agents include interfaces taking care of an adaptation between the transmission modes inside the Agent itself and those foreseen on the connection line with the server, and are specifically configured for the single Agent. These interfaces are profitably implemented through programmable logic devices (FPGA = Field Programmable Gate Array). These devices are realized with Static RAM technology, therefore they are volatile and require, during starting (power supply), an external entity capable of configuring them. The component configuration takes place for instance with the use of an EEPROM (read and write memory) that is read and acquired by the interface in a start up phase of the Agent.

### Object and summary of the Invention

In applications such as those considered it isn't infrequent having to re-configure the interface to adjust it to the evolutions of working protocols or to overcome malfunctions. This means having to replace the EEPROM, operation that is not always easy, keeping also into account the physical location of the Agents (e.g. on poles, walls or ceilings), becoming long and expensive if the replacement concerns a plurality of Agents.

According to the invention, it is offered a transceiver station of a mobile communication system whose peripheral units include a re-configurable interface, which can be reconfigured without the need to actually replace the memory containing the configuration code (except, of course, for the case of double failure of the memories themselves). The re-configuration operation is completely remote controlled through the processor installed on the central part (no need of processor on remote part).

The station according to the invention is characterized in that said interface includes: a logic programmable device, operating on the basis of a un configuration capable also of controlling the operations requested by said adjustment; and a couple of configuration memories, containing both the same program code for said device, in order that one of them can act as back-up of the other.
Said memories autonomously allow, during the interface starting configuration phase, to transfer the configuration code to the device, or following the command of the processor resident on the central unit, to check and update the content (configuration) resident in the same.

The invention relates also to a configuration procedure for said interface. The procedure includes the following operations:
- perform an initial configuration of the interface, on enabling of the peripheral unit which the interface belongs to, through the transfer to a logic programmable device, inside the interface and destined to carry out operations requested by said adjustment, of a configuration code read by a couple of programmable configuration memories;
- perform, at least after the initial configuration, a check of the configuration itself, controlling that in both said memories a same version of program code is present and that said version is the current version;
- go to an operating phase of the peripheral unit, if the check is successful; or
- update the memories, if the check is not successful.

### Brief description of figures

The invention may be better understood with reference to the following detailed description, taken in conjunction with the accompanying drawings, in which:
- figure 1 is a simplified block diagram of a transceiver station of a mobile communication system in which the invention is applied;
- figure 2 is a block diagram of the re-configurable interface of a peripheral unit of the station shown in fig. 1;
- figures 3a and 3b show the frame structure of the of messages exchanged between the central unit and the peripheral unit during the interface configuration procedure; and
- figures 4a - 4c are flow charts of the procedure.

### Description of a preferred embodiment of the invention

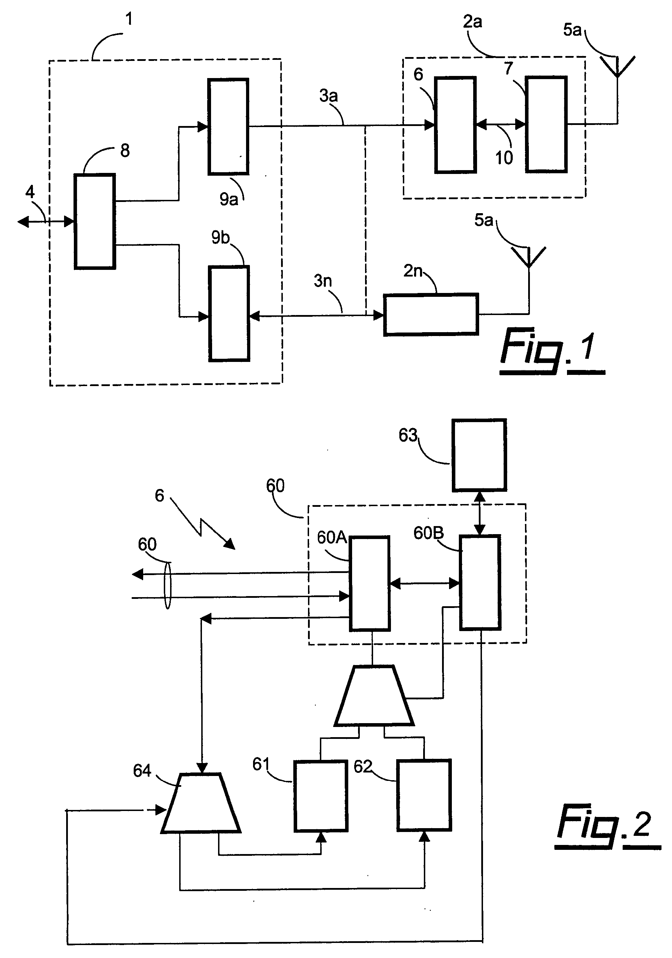

With reference to figure 1, for example purposes we have described a transceiver station of the "picoBTS" type mentioned in the introduction, including a central unit or server 1 and a plurality of peripheral units or Agent 2a...2n, distributed inside the served area and controlled by server 1. The peripheral units 2a...2n are connected to server 1 through relevant twisted pairs 3a...3n, where communication preferably takes place in MDSL technology (Multirate Digital Subscriber Line). The server 1 is in turn connected to the controller of the base transceiver station or to servers of other stations (not shown) through one or more lines 4.

The server 1 is the intelligent part of the transceiver station, managing and controlling the whole station, including also the re-configuration of peripheral units in case of working protocol variation or in case of failure (this is the sole interesting function to the purposes of the present invention); generation of synchronization signals; interfacing with the base station controller or with other transceiver stations of the base station, etc. The detailed knowledge of the structure of server 1 is not necessary for the understanding of the invention, therefore the figure shows only the control unit 8 (microprocessor) controlling the re-configuration operations and interfaces 9a...9n for the connected to the twisted pairs 3a...3n.

The peripheral units 2a...2n are associated to the relevant antenna 5a...5n (internal or external) and are adapted to control the receipt/transmission of signals and the digital and analogue processing of radio signals relevant to a single carrier. As shown for unit 2a, to understand the invention, a peripheral unit can be represented by an interface 6 to which the twisted pair 3a is connected and by parts 7 for the reception/transmission and processing of signals destined to the antenna 5a or coming from the same. The interface 6 performs also an adjustment between the transmission modes of signalling data packets (non real time signalling ) inside the unit itself and those foreseen on the twisted pair (in particular, an adjustment of transmission speeds) on the basis of a program stored inside, which configures the interface 6 depending on the functions that unit 2a shall perform. With 10 we have indicated the connection between the interface 6 and the parts 7.

As it can be noticed in fig. 2, the interface 6 includes, as main component, a logic programmable device 60A performing the requested adjustment operations. The device 60 consists of a set of user programmable logic ports (Field Programmable Gate Array or FPGA) 60A, preferably implemented with SRAM technology (Static RAM = static random access memory ), and a control state machine 60B, external to the FPGA. As it is already known, a component implemented according to this technology (FPGA) is volatile in itself, meaning that, at the peripheral unit switching on, the configuration information characterizing the specific HW functions requested to the component have to be loaded. This is made by a couple of electronic read and write (EEPROM) memories 61, 62, connected to the programmable device 60A, which can be programmed by server 1 and both containing the configuration of the programmable device. The presence of two memories is dictated by obvious reliability reasons and enables to do the reconfiguration of the interface if at least one of the two memories 61, 62 has a valid content. Interface 6 includes also a watch dog circuit (watch dog) 63 that detects whether the code transfer from a memory 61, 62 to the programmable device 60A has successfully completed in a fixed (pre-determined) time, causing, if necessary the exchange between memories 61, 62, as better described later on.

A demultiplexer 64, remote controlled by server 1, represents the possibility for server 1 to write in either memory.

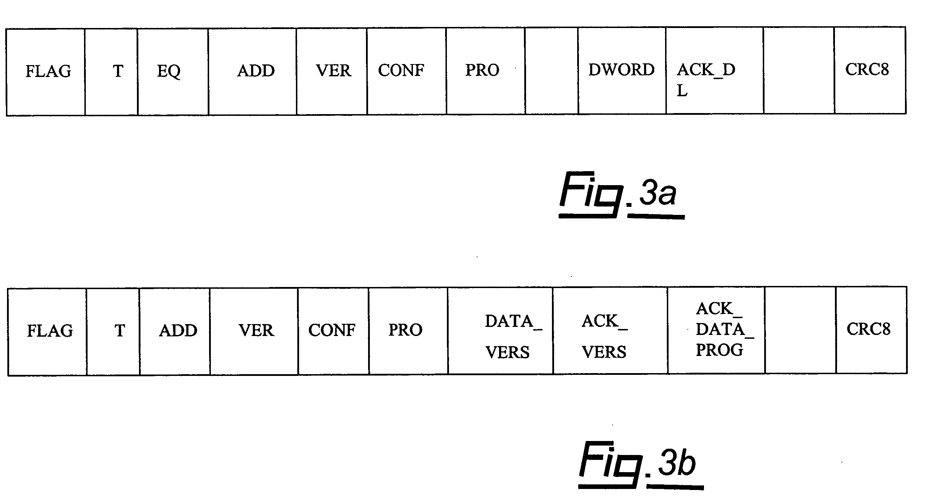

The configuration and re-configuration process of interface 6 occurs in a particular phase called test phase of unit 2 it belongs to, this for not using part of the bandwidth during the operative phase . The initial configuration at switching on of unit 2 (loading of the configuration file in the programmable device 60A) is locally controlled in interface 6, under the control of state machine 60B . Once the component has configured, the configuration control operations and any possible re-configurations are managed by server 1. During this process, there is an exchange of messages/information between server 1 and the peripheral unit 2. These messages are inserted in frames having pre-defined length. The frame organization is shown in fig. 3a for the server - peripheral unit direction and in fig. 3b for the opposite direction.

In particular, in the direction towards the peripheral unit the messages include:
- a field FLAG delimiting the frame;
- a field T indicating the configuration phase of interface 6 or interface available for operating phase;
- an EQ field to control equalization (compensation of the propagation time) having the length of the twisted pairs 3 (not of interest for this invention);
- an ADD field for the selection of the memory involved in a re-configuration operation of interface 6 (code reading in the memory selected by ADD and its loading in the programmable device 60A) or for the programming or updating of the memories themselves; the content of this field represents therefore the command for the demultiplexer 64;
- a VER request field of the version of programme code present in the programmable device 60A;
- a CONF field for a re-configuration control. This control causes the re-configuration of the programmable device FPGA (element 60A of fig. 2 ) from memory (61 or 62) indicated by the ADD field. Operatively, the content of the memory identified by the ADD field is caused to flow in the device 60A for the operating configuration of the same;
- a PRO field for the programming control, controlling the memory writing The memory selection is indicated by ADD ( 61 or 62 ). This command enables the server 1 to load in 61 or 62 depending on the value set in ADD, a new content;
- a DWORD field for the data packet to write in the memory indicated by ADD;
- an ACK_DL field to confirm the occurred sending of valid data in the previous field. This field is used to identify the presence of a new datum sent by the server;
- a CRC8 field for a control word (cyclic redundancy code) of the frame content correctness.

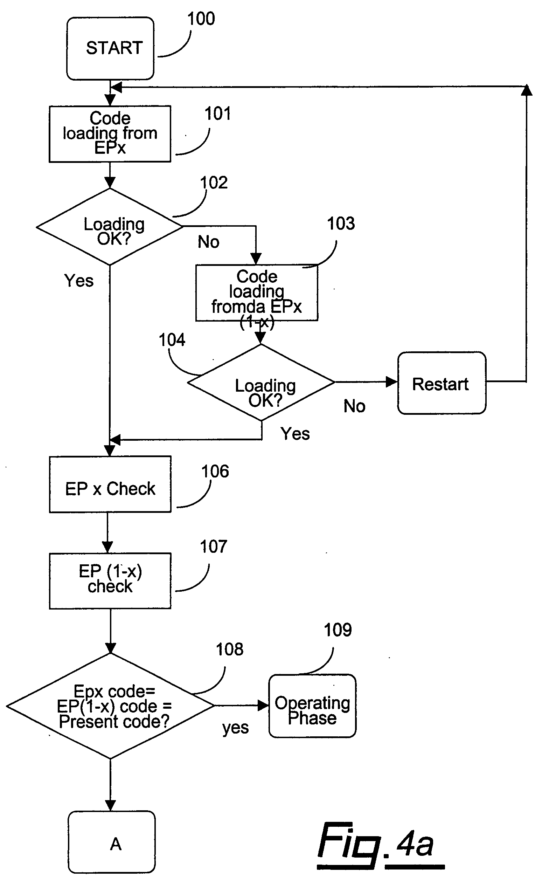

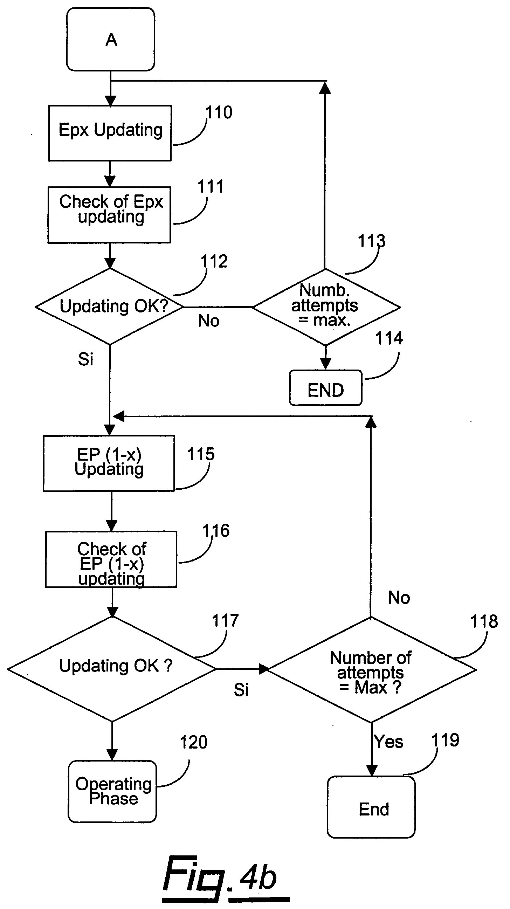

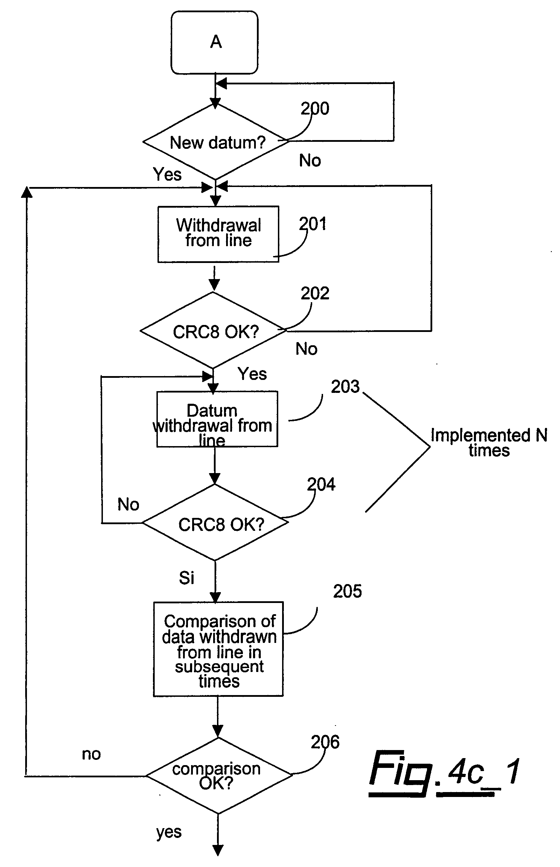

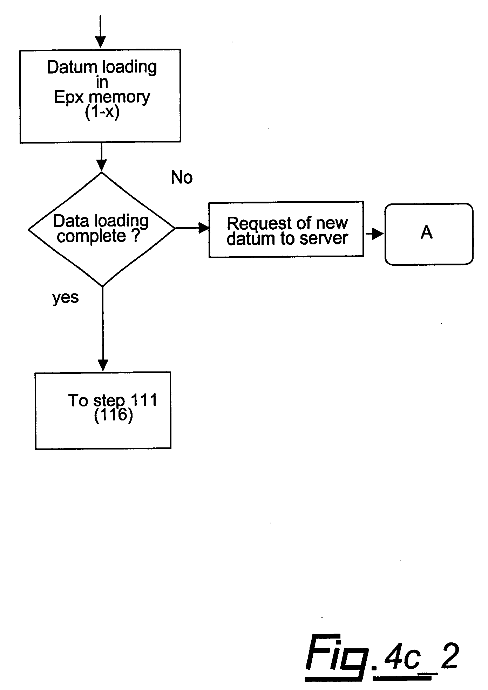

In the direction towards the server unit, the messages include
- the FLAG, T, ADD, VER, CONF, PRO fields that have the same meaning of the homonym fields present in the messages sent by the server 1 and in particular the ADD, VER, CONF, PRO fields mirror the value received by the server unit 1;
- a DATA_VERS field, in which the peripheral unit enters the release version present in the programmable device 60A, in response to the VER request coming from the server;
- an ACK_VERS field, whose content identifies the valid data for the version release entered in DATA_VERS;
- an ACK_DATA_PROG field the content of which represents a confirmation signal of the capture of the data word DWORD sent by the server.
- the control code CRC8. It must be noticed that, even if the presence of the control code gives a safety measure against message reception errors, the messages containing data to write in the memories (61 or 62) are checked many times before being transferred to the memories. When the data received has been considered correct, since for a given number of frames we have received the same information without CRC error, the data is transferred into the memory and the request of a new data to the server through the ACK_DATA_PROG field is activated.
   We shall now describe the configuration operation for interface 6, with reference to the flow charts of figures 4a - 4c.

The first operation, at switching-on of unit 2 which interface 6 belongs to (START, step 100), is the configuration of the programmable logic device 60A, that is, the code loading withdrawing it from one of the memories 61, 62 (CODE LOADING FROM EPx, step 101). As already said, this phase is locally and separately controlled by the state machine 60B: in fact, until the logic array 60A has not configured, it is not possible to control the connection with the server 1.

The configuration of the FPGA (programmable device) 60A shall take place within a pre-set time, and therefore the starting of the configuration operation causes also the starting of the count of said time by the watch dog circuit 63. If the time elapsed before the loading is completed (negative result of step 102), the state machine 60B causes the device switching with consequent restart of the configuration from the other memory (CODE LOADING FROM EP(1-x), step 103). Also in this case the time count is started by the watch dog circuit 63, and if also the reading of the code from the second memory is not successful (negative result of step 104), the process is repeated (step 100).

If on the contrary, the code could be correctly loaded in the device 60A, the next step is the check, by server 1, of the code version contained in the two memories (CHECK EPx, CHECK EP(1-x), steps 106, 107). The two memories 61, 62, if correctly operating from the hardware point of view, shall contain the same code version; furthermore, it must be checked if the version itself is the current one or not. To this purpose, a version identifier is contained in an appropriate code field.

The server 1 shall therefore request the interface 6 to read the code first from one and then from the other memory, and the interface shall send, for each one of the memories, a message containing, in the DATA_VERS field, the identifier of code version loaded and the identity of the memory from which the code has been read, to server 1.

If the server 1 recognizes that both the memories 61, 62 contain the present code version (positive result of step 108), the unit performs the other operations requested by the enabling procedure and becomes operating (OPERATING PHASE, step 109). In the contrary instance, the updating of the same is made.

The updating is separately made for the two memories, and the second memory is updated only after successful completion of the updating of the first one. The updating phase includes therefore at first the UPDATING EPx (step 110) and CHECK UPDATING EPx (step 111) steps, in addition to a control step 112 of the check result.

In step 110, the server 1 sends the interface 6 messages in which the PRO command shall be enabled, the EPx address shall be contained in field ADD and data words forming the code to load in the memory, associated to the relevant signal of data ready ACK_DL shall be contained in the DWORD field. For each word, the transmission is maintained, until the data is not considered correct.

The step 110 is shown in figures 4C-1 and 4C-2.

The check operation of step 111 is similar to that seen for steps 106, 107. It is requested the new loading of the programmable device with the file contained in the EPx memory indicated by the ADD field and then the server 1 asks the version reading. The version content contains also the identity of the EPx memory that loaded the programmable device (60A). If the server detects that the operation is successful (positive result of step 112), proceeds to the updating of the second memory (UPDATING EP(1-x), CHECK UPDATING EP(1-x), steps 113, 114) according to the same methods. At the end of the updating of the second memory, if also this was successful (positive result of step 115), it can proceed to the operating phase.

If at steps 112 or 115 it is detected that the updating did not correctly occur and if the pre-set number of attempts has not yet been reached (negative result of step No. ATTEMPTS = NMAX, step 116 or 118), a new attempt is made for updating. Exhausted all the attempts the procedure is discontinued (step 117 or 119).

The separate updating of the two memories avoids the risk of writing corrupted information in both the memories during the transfer phase of the new code, which would turn out in an irreversible incorrect starting of the peripheral unit with the consequent need to replace the card where the interface is installed.

It is evident that variants and modifications are possible for a field technician without departing from protection of the following claims.

## Claims

1. Communication system including a central unit and a plurality of peripheral units, or Agents, (2a...2n) connected to said central unit (1) and each one including a re-configurable interface (6) for the adaptation of service signals among the lines (3a...3n) that connect the central unit (1) with the peripheral units (2a...2n) and lines (10) inside said peripheral units (2a...2n), **characterized in that** said interface (6) includes: a logic programmable device (60), operating on the basis of a configuration to perform the operations requested by said adaptation; and a couple of configuration memories (61, 62), containing both a same program code for said device (60) in order that one of them can act as stand-by memory, said memories being suitable to autonomously configure the logic device (60), or in answer to a command supplied by said central unit (1), and being also suitable to check and update the configuration.

2. System according to claim 1, **characterized in that** it includes also a watch dog circuit (63), connected to said logic device (60), set to check that the code transfer from a memory (61, 62) to the logic device (60) occurs within a maximum pre-set time and to cause, at least during said initial configuration phase, the connection of the logic device (60) to the other memory (62, 61), if the code transfer from said other memory to the logic device (60) must still be made.

3. System according to claim 1 or 2, **characterized in that** said central unit (1) is suitable to check, after the initial configuration, that both the memories (61, 62) contain a current version of the code, and to control the updating of said memories (61, 62) if said memories (61, 62) contain a former version of the code or do not contain a same code version.

4. System according to claim 3, **characterized in that** said central unit (1) is suitable to control the updating of said memories (61, 62) in two subsequent phases, the updating of the second memory being controlled only if that of the first one was successful.

5. System according to claim 3 or 4, **characterized in that** said central unit (1) is also adapted for a check of the updating made in the memories (61, 62), requesting the updated code transfer to the logic device (60) and the sending by the latter, of information relevant to a code version identifier, contained in the code itself, and to the memory (61, 62) identity.

6. System according to any of the previous claims, **characterized in that** said logic device (60) includes an array of in field programmable logic ports (60A), performing the operations requested by said adaptation, and a control logic (60B) controlling also the initial configuration step.

7. System according to any of the previous claims, **characterized in that** it is a transceiver station belonging to a base transceiver station of a picocellular GSM system communication .

8. Method for the configuration of re-configurable interfaces (6), placed in each peripheral unit (2a...2n) of a communication system including a central unit (1) and a plurality of said peripheral units (2a...2n), and suitable for the adaptation of service signals among the lines (3a...3n) connecting the central unit (1) with the peripheral units (2a...2n) and lines (10) inside said peripheral units (2a...2n), **characterized in that** they include the following steps:
- performing an initial configuration of the interface (6), on enabling of the peripheral unit (2a...2n) which the interface (6) belongs to, through the transfer to a programmable logic device (60), inside the interface (6) and destined to carry out the operations requested by said adjustment, of a program code read by a couple of configuration memories programmable and erasable (61, 62);
- performing, at least after the initial configuration, a check of the configuration itself, checking that both the memories (61, 62) contain a same program code version and that said version is a current version;
- going to an operating step of the peripheral unit (2a...2n), if the check was successful; or
- updating the memories (61, 62), if the check was unsuccessful.

9. Method according to claim 8, **characterized in that** said code transfer from a memory (61, 62) to the logic device (60) during the initial configuration includes the operations to check that said transfer occurs within a pre-determined time and, in the negative, to connect the logic device (60) to the other memory.

10. Method according to claim 8 or 9, **characterized in that** the updating of the two memories (61, 62) is made in subsequent times, checking for each of the correct updating, and the updating of the second memory is made only if the first one has been correctly updated.

11. Method according to claim 10, **characterized in that** the check of the correct updating of a memory (61, 62) its transfer to said programmable logic device (60) of the updated program code, and the sending from the logic device (60) to the central unit of a read code version identifier and of the memory identity from which the code has been read.

12. Method according to any of the previous claims 8 through 11, **characterized in that** the updating of a memory (61, 62) is repeated up to a pre-determined maximum number of times, if the check of the correct updating gives negative result.

13. Method according to any claim 8 through 12, **characterized in that** said configuration check and updating operations are controlled by the central unit (1), through control or request messages sent by the central unit (1) to the interface (6) and response messages sent by the interface (6) to the central unit (1).

14. Method according to claim 13, **characterized in that** control and request messages are structured in order to include at least:
- a first field (T) for a identifier signalling that we are in the interface configuration phase(6);
- a second field (ADD) for the selection of the memory (61, 62) involved in a reading or code updating operation ;
- a third field (VER) for transfer request, by the interface (6), of the identifier of a code version read in a memory (61, 62) and of the identity of said memory;
- a fourth field (CONF) fore a reading command of the code from the selected memory (61, 62);
- a fifth field (PRO) for a writing command of a new code version in the selected memory (61, 62);
- a sixth field (DWORD) for a data word of the code to write in the selected memory (61, 62);
- a seventh field (ACK_DL) for the confirmation of the occurred sending of valid data in the previous field;
- an eighth field (CRC8) for message correctness control word .

15. Method according to claims 13 and 14, **characterized in that** response messages include at least:
- a first, second, third, fourth and fifth field (T, ADD, VER, CONF, PRO) having the same meaning of the homonymous fields present in the messages sent by the central unit (1), but in which the content of the second, third, fourth and fifth field (ADD, VER, CONF, PRO) mirror the value received by the interface (6);
- a sixth field (DATA_VERS) for the code version identifier and memory identity;
- a seventh field (ACK_VERS) for a valid datum signal for the data included in the sixth field (DATA_VERS);
- an eighth field (ACK_DATA_PROG) for a confirm signal of the receipt of a data word of the code present in the sixth field (DWORD) of a message sent by the central unit (1);
- a ninth field (CRC8) for a message correctness control word.

16. Method according to any claim 8 through 15, **characterized in that** said transceiver station is a transceiver station belonging to a base transceiver station of a GSM picocellular communication system .
